# EUROPÄISCHE PATENTSCHRIFT

(11) **EP 3 043 154 B1**
(45) Veröffentlichungstag und Bekanntmachung des Hinweises auf die Patenterteilung: **24.03.2021**
(21) Anmeldenummer: 16157601.2
(22) Anmeldetag: 08.02.2008
(51) Int. Cl.: G01F 1/66, G01F 1/74

(54) **FLUIDZÄHLER**
FLUID COUNTER
COMPTEUR DE FLUIDE

(30) Priorität: 09.03.2007 DE 102007011546
(43) Veröffentlichungstag der Anmeldung: 13.07.2016
(62) Teilanmeldung aus: 08002345.0
(73) Patentinhaber: Diehl Metering GmbH, 91522 Ansbach (DE)
(72) Erfinder: Sonnenberg, Hans-Michael, 91522 Ansbach (DE); Schmidt-Schoenian, Axel, 91522 Ansbach (DE); Meßthaler, Roland, 91575 Windsbach (DE)
(74) Vertreter: Stippl, Hubert

(56) Entgegenhaltungen:
- DE-A1- 19 729 473
- DE-U1- 9 420 760
- GB-A- 2 429 061

## Beschreibung

Die vorliegende Erfindung betrifft einen Fluidzähler gemäß dem Oberbegriff des Anspruchs 1.

Ein Fluidzähler gemäß dem Oberbegriff des Anspruchs 1 ist aus der DE 197 29 473 A1 bekannt. Das Anschlussgehäuse dieses Fluidzählers weist eine Tasche auf, in die ein Messeinsatz einsetzbar ist. Die Tasche ist mittels eines Deckels verschließbar ist. Am Deckel des Messeinsatzes sind auch die Elektronikteile angeordnet.

Ferner ist aus der Broschüre Meßsystem "ultrakon®" Ultraschall-Wärmezähler EWZ 810 der Fa. IWK Regler und Kompensatoren GmbH ist ein Wärmezähler bekannt, welcher einen ein Anschlussgehäuse sowie ein Elektronikgehäuse umfassenden Volumengeber sowie ein an dem Volumengeber befestigtes Rechenwerk mit Anzeige umfasst. Der Wärmezähler kann sowohl in eine waagerechte als auch senkrechte Rohrleitung eingebaut werden. Über einen optionalen Beschlag kann das Rechenwerk statt in einer horizontalen oder vertikalen Lage auch in einer abgewinkelten Lage positioniert werden. Bei der Montage des Volumengebers ist darauf zu achten, dass sich das Elektronikgehäuse immer seitlich befindet. Eine andere Anordnung fuhrt zu Fehlmessungen.

Ähnliche Anordnungen sind auch aus der Betriebsanleitung zu "Statischer Wärmezähler 2WR4" Bestell-Nr. NZ 839e-000 der Siemens AG sowie der Broschüre ULTRAFLOW II E20 499 der Fa. Kamstrup A/S bekannt.

Die WO 00/23773 beschreibt ein Verfahren zur Bestimmung der Flüssigkeitsdichte. Hierbei wird an der Außenseite des Messrohrs eine Mehrzahl von Ultraschallwandlern aufgesetzt, deren Flächennormale senkrecht zur Längsachse des Messrohrs angeordnet ist. Die Ultraschallsignale des jeweiligen Ultraschallwandlers werden von einer im Inneren des Messrohrs angeordneten Referenzfläche direkt zu demselben Ultraschallwandler zurück reflektiert. Die Ultraschallwandler können hierbei bezogen auf den Querschnitt des Messrohrs in einer bezogen auf die Uhrzeigerposition 1 - 5 Uhr bzw. 7 - 11 Uhr-Position am Messrohr befestigt sein. Bei weiteren Ausgestaltungen, bei denen das von einem ersten Ultraschallwandler ausgesandte Ultraschallsignal von einem zweiten Ultraschallwandler empfangen werden soll, sind die Ultraschallwandler an der Außenseite des Messrohrs derart positioniert, dass deren Flächennormale schräg zur Längsachse des Messrohrs liegt.

Die US 2002/0124661 A1 zeigt eine Vorrichtung zur Messung von Strömungen, bei der die Ultraschallwandler bezogen auf den Querschnitt des Messrohrs ebenfalls seitlich geneigt angeordnet sein können, deren Flächennormale jedoch ebenfalls schräg zur Längsachse des Messrohrs verlaufend angeordnet ist.

Die EP 1 096 236 A2 beschreibt einen Ultraschall-Durchflussmesser für Fluide, bei dem die Flächennormale des jeweiligen Ultraschallwandlers parallel zur Längsachse des Messrohrs angeordnet ist und das den jeweiligen Ultraschallwandler verlassende Ultraschallsignal an einer im Messrohr angeordneten Krümmung schräg zur gegenüberliegenden Wandung des Messrohrs reflektiert und von dort ebenfalls schräg weiterreflektiert wird, bis es den zweiten Ultraschallwandler erreicht.

Aus der GB 2 429 061 A ist ein Gehäuse für einen Ultraschall-Durchflusszähler bekannt. Der Ultraschall-Durchflusszähler besitzt ein U-förmiges Messrohrgehäuse. Ferner ist ein mehrteiliges Gehäuse für Elektronikbauteile vorgesehen, dessen Hauptteil sowie Unterteil eine gemeinsame Ausnehmung zur Aufnahme des Messrohrgehäuses bilden und das Messrohrgehäuse nach Art einer Schelle umgreifen. Demzufolge umgreift das Gehäuse für Elektronikbauteile das Messrohrgehäuse und fixiert letzteres gleichzeitig.

Die DE 103 27 076 B3 beschreibt einen Fluidzähler, der eine mehrteilige Messrohranordnung umfasst. Ein aus Messing bestehendes Messrohr befindet sich innerhalb eines Messrohrgehäuses. Die Ultraschallwandler sind an der Oberseite des Messrohrgehäuses in einer entsprechenden Ausnehmung positioniert. An der Oberseite der Wandler befinden sich üblicherweise die Elektronikplatine sowie das Anzeigeelement jeweils in paralleler Anordnung zur Ultraschallwandlerfläche. Als genormte Einbauebene ist bei einer horizontalen Rohrleitung z. B. für das Medium Wasser eine Anzeige mit waagrecht ausgerichteter d.h. horizontal ausgerichteter Anzeigeebene oder eine um 90° gedrehte (senkrechte) Anzeigeebene und bei einer senkrechten Rohrleitung eine Anzeige mit senkrechter Anzeigeebene vorgesehen. Die Einbauebene horizontal mit waagrechter d.h. horizontaler Anzeigeebene ist die häufigste in der Praxis vorkommende Einbaulage. Der Ultraschallwandler sitzt aufgrund der wichtigsten, vorbeschriebenen Anordnungen daher an der höchsten mit Fluid durchströmten Stelle. Daraus resultiert der Nachteil, dass sich in dem Fluid befindliche Gasblasen an der Oberfläche der Wandler festsetzen und hierdurch Störungen bei der Messung verursachen. Ein Verdrehen des gesamten Fluidzählers zur Vermeidung der Belegung der Wandleroberflächen mit Gasblasen ist nicht möglich, da Fluidzähler in genau festgelegten Einbaulagen montiert werden müssen und bei einer Verdrehung zudem die Ablesbarkeit der Anzeigeeinrichtung nicht mehr gewährleistet wäre. Der Einbausituation sind daher lediglich sehr enge Grenzen gesetzt.

Aus der DE 94 20 760 U1 ist ein Durchflussmesser mit einem geradlinigen Messrohrgehäuse bekannt. Daneben ist ein weiteres Gehäuse vorgesehen, welches Elektronikbauteile enthält und direkt im Bereich der Ultraschallwandlerposition mit dem Messrohrgehäuse verbunden ist.

Die Aufgabe der vorliegenden Erfindung besteht darin, einen gattungsgemäßen Fluidzähler zur Verfügung zu stellen, welcher einfach herzustellen ist sowie eine variable Positionierung von Messrohrgehäuse zu Elektronikgehäuse ermöglicht.

Die vorliegende Aufgabe wird beim gattungsgemäßen Fluidzähler durch die Merkmale des kennzeichnenden Teils von Anspruch 1 gelöst. Erfindungsgemäß weist die Halteeinrichtung ein erstes Halteteil sowie ein zweites Halteteil auf, die eine Ausnehmung zur Aufnahme des Messrohrgehäuses bilden und das Messrohrgehäuse nach Art einer Schelle umgreifen. Hierdurch wird eine konstruktiv besonders einfache Lösung zur Fixierung geschaffen. Aufgrund der konzeptionellen Trennung der beiden Gehäuse sowie deren winkelversetzten Verbindbarkeit über die Halteeinrichtung lassen sich die beiden Gehäuse in einfacher Weise in einer gewünschten Winkellage zueinander positionieren. Demzufolge ist es möglich, dass die Flächennormale N des Ultraschallwandlers bezogen auf die oberste Position des mit Fluid gefüllten Inneren des Messrohrgehäuses in Einbaulage mit der Ebene E derart angeordnet ist, dass das Ultraschallsignal in der horizontalen Einbaulage des Fluidzählers nicht von oben auf die Umlenkeinrichtung auftrifft. Gemäß der vorgenannten Idee liegen der oder die Ultraschallwandler nicht mehr an der obersten Position des vom Medium durchströmten Raums sondern tiefer. Hierdurch werden die im Fluid vorhandenen Gasbläschen an einer Stelle im Inneren des Zählers gesammelt, an der sie keine die Genauigkeit der Messung beeinflussende Auswirkung haben. Gleichzeitig bleibt allerdings die gute Ablesbarkeit des Fluidzählers durch die weiterhin an der höchsten Stelle befindliche Anzeigeeinrichtung bestehen. Zudem ist erfindungsgemäß das zweite Halteteil als eigenständiges Teil mit dem Gehäuse verbunden. Das zweite Halteteil kann dann eigenständig produziert werden. Schließlich ist das Elektronikgehäuse als eigenständiges Gehäuse ausgebildet,

Zweckmäßigerweise trifft das Ultraschallsignal seitlich auf. Der seitliche Winkelversatz der Flächennormalen N des Ultraschallwandlers liegt zur Senkrechten bezogen auf die Ebene E in einem Winkelbereich zwischen 30° - 60°, vorzugsweise 40° - 50°, besonders vorzugsweise 42° - 48°. Beispielsweise kann der Winkel 45° betragen.

Alternativ trifft das Ultraschallsignal in Einbaulage von der Unterseite auf die Umlenkeinrichtung 11. Vorzugsweise liegt der Winkelversatz der Flächennormalen N des Ultraschallwandlers in diesem Fall in einem Winkelbereich zwischen 160° - 200°, vorzugsweise 160° - 190°. Beispielsweise kann der Winkel 180° betragen.

Der Vorteil des seitlichen Winkelversatzes von 30° - 60° oder 160° - 200° liegt auch darin begründet, dass, wenn die Anzeigeeinheit um 90° aus der Einbauebene gedreht wird, um seitlich den Zähler abzulesen, ebenfalls die Wandler nicht am höchsten Punkt stehen und damit die Luftblasen sich auch dann nur seitlich zum Wandler ansammeln können. Dies wäre bei einem Winkel von 90° nicht gewährleistet.

Insbesondere beziehen sich die vorgenannten Winkelangaben der Flächennormalen N des Ultraschallwandlers auf die Senkrechte zur Anzeigeebene A des Anzeigeelements oder zumindest einer Haltevorrichtung für ein externes Anzeigeelement.

Aufgrund der vorgenannten Merkmale wird gewährleistet, dass der Fluidzähler gut ablesbar ist und die Bestimmungen eines normgerechten Einbaus erfüllt gleichzeitig aber Störungen aufgrund Luftbläschen an der Oberseite des Messrohrgehäuses wirksam ausgeschlossen werden können.

Zweckmäßigerweise ist die Halteeinrichtung derart ausgebildet, dass das Messrohrgehäuse in der Halteeinrichtung festklemmbar ist. Diese Art der mechanischen Fixierung ermöglicht es, aufwendige Arbeiten (wie z. B. das Einbringen von Gewindebohrungen) am Messrohrgehäuse, welches insbesondere aus Metall besteht, zu verzichten. Es sind lediglich noch geringfügige mechanische Bearbeitungen des Messrohrgehäuses (z. B. das Einbringen von Aufnahmetaschen für Temperaturfühler und/oder Durchgangsbohrungen für Ultraschallsignale) notwendig. Hierdurch können die Teilevielzahl reduziert und die Kosten der Herstellung deutlich gesenkt werden.

Die vorher beschriebene Art der Befestigung hat den zusätzlichen Vorteil, dass mindestens ein Funktionsteil durch die umgreifende Halteeinrichtung in Position gehalten werden kann. Bei dem Funktionsteil handelt es sich beispielsweise um einen Wandler, der sich in einer Tasche oder Ausnehmung, beispielsweise am Halteteil, befindet und/oder um einen Temperaturfühler. Es müssen lediglich Ausnehmungen für diese Funktionsteile vorgesehen sein, die verarbeitungstechnisch einfach zu realisieren sind. Die Fixierung erfolgt durch den Umgriff der Halteeinrichtung. Dieser Umgriff der Halteeinrichtung verhindert, dass durch den Innendruck des Mediums die zu haltenden Elemente (Wandler/T-Fühler) aus ihrer Position gedrückt werden.

Zweckmäßigerweise kann zwischen dem Messrohrgehäuse und der Halteeinrichtung eine Verdrehsicherung vorgesehen sein, beispielsweise in Form eines Vorsprungs an der Halteeinrichtung, der in eine entsprechende Ausnehmung am Messrohrgehäuse eingreift oder umgekehrt. Beim Ansetzen eines Drehmoments an dem Messrohrgehäuse, beispielsweise beim Einschrauben desselben in eine Fluidleitung, kann hierdurch eine Verschiebung der Winkellage des Messrohrgehäuses zur Halteeinrichtung und damit eine Fehlposition und/oder Beschädigung des Inneren vermieden werden.

Bei einer zweckmäßigen Ausgestaltung des erfindungsgemäßen Fluidzählers ist das erste Halteteil in das Messrohrgehäuse integriert, also als einstückiger Bestandteil desselben ausgebildet. Dies ist vor allem dann von Vorteil, wenn das Messrohrgehäuse insgesamt aus Kunststoff besteht.

Das zweite Halteteil der Halteeinrichtung ist zweckmäßigerweise als einheitliches Teil (Adapterteil) zur Aufnahme von ersten Halteteilen mit unterschiedlichen Durchflussnennquerschnitten der Messrohre vorgesehen. Es ist somit möglich, lediglich durch Austausch des ersten Halteteils Messrohrgehäuse mit Messrohren unterschiedlichster Nennweiten mit dem Gehäuse, welches die Elektronikteile beinhaltet, zu verbinden.

Hierzu sind vorzugsweise mehrere Wahlmontagepositionen, beispielsweise mehrere Montagebohrungen in unterschiedlichen Abständen am zweiten Halteteil, vorgesehen, so dass je nach dem welches erste Halteteil zu montieren ist, die eine oder andere Montageposition ausgewählt werden kann.

In Fällen, bei denen die Elektronik oder eine externe Anzeigevorrichtung in einem eigenständigen Gehäuse untergebracht ist, kann das zweite Halteteil auch so ausgeführt sein, dass es das externe Gehäuse an einer Haltevorrichtung am zweiten Halteteil derart fixiert, dass in der normgerechten Einbaulage das externe Anzeigeelement horizontal oder 90° gekippt ablesbar ist und die Wandler mit dem seitlichen Winkelversatz im Messrohrgehäuse positioniert sind.

Aufgrund der Erfindung besteht die Möglichkeit, das zweite Halteteil mit dem Gehäuse lösbar, beispielsweise über Schnappverbindungen oder dergleichen, zu verbinden.

Dadurch, dass die jeweilige Montageposition in einen Bereich an dem zweiten Halteteil vorgesehen ist, der seitlich vom Gehäuse für die Elektronikteile vorspringt, ist die bzw. sind die Montageposition (en) zur Befestigung des ersten Halteteils besonders einfach zugänglich. Insbesondere kann eine Art verandaförmiger Vorsprung des zweiten Halteteils am Gehäuse für die Elektronikteile vorgesehen sein.

Zweckmäßigerweise ist im Gehäuse mindestens ein Führungskanal für eine Drahtverbindung vom jeweiligen Wandler und/oder von einem Temperaturfühler vorgesehen. Der Führungskanal gewährleistet beim Zusammenbau eine vorbestimmte Ausrichtung und Positionierung des betreffenden Verbindungsdrahts und damit eine leichte Montierbarkeit sowie eine Reduzierung von Montagefehlern.

Das erste Halteteil kann zweckmäßigerweise nach Art einer Schale ausgebildet sein, die das Messrohrgehäuse unterseitig vorzugsweise über dessen Länge umfasst. Alternativ können aber auch mehrere z. B. zwei Halteteile auf Abstand (z. B. an der Vorderseite sowie Rückseite) das Messrohrgehäuse zur Fixierung desselben am zweiten Halteteil nach Art einer Rohrschelle umgreifen.

Wird bei dem Verspannen der beiden Gehäuse miteinander im Kontaktbereich auch der Ultraschallwandler mit eingespannt, können am Ultraschallwandler auftretende Druckkräfte in einfacher Weise vom Gehäuse abgefangen werden.

Die Position erlaubt es zudem, zusätzliche Funktionsteile, wie z.B. einen Temperaturfühler ohne aufwendige Bearbeitungsmaßnahmen am Messrohrgehäuse lagefest und sicher zu fixieren, in dem das Funktionsteil in der Montagelage durch das Gehäuse für die Elektronikbauteile bzw. durch das Übergriffteil lagefixiert ist.

Zweckmäßige Ausgestaltungen der vorliegenden Erfindung werden anhand von Zeichnungsfiguren nachstehend näher erläutert. Wiederkehrende Merkmale sind der Übersichtlichkeit halber lediglich einmal angegeben. Es zeigen:
- Fig. 1: eine stark vereinfachte, schematisierte Längsteilschnittdarstellung des Messrohrgehäuses einer ersten Ausgestaltung des Fluidzählers;
- Fig. 2: eine Schnittdarstellung entlang der Linie I-I von Fig. 1;
- Fig. 3: eine stark vereinfachte, schematisierte Teilschnittdarstellung der ersten Ausgestaltung des erfindungsgemäßen Fluidzählers mit montiertem Elektronikgehäuse sowie
- Fig. 4: eine Teilschnittdarstellung einer zweiten Ausgestaltung des erfindungsgemäßen Fluidzählers (ohne Messrohrgehäuse).

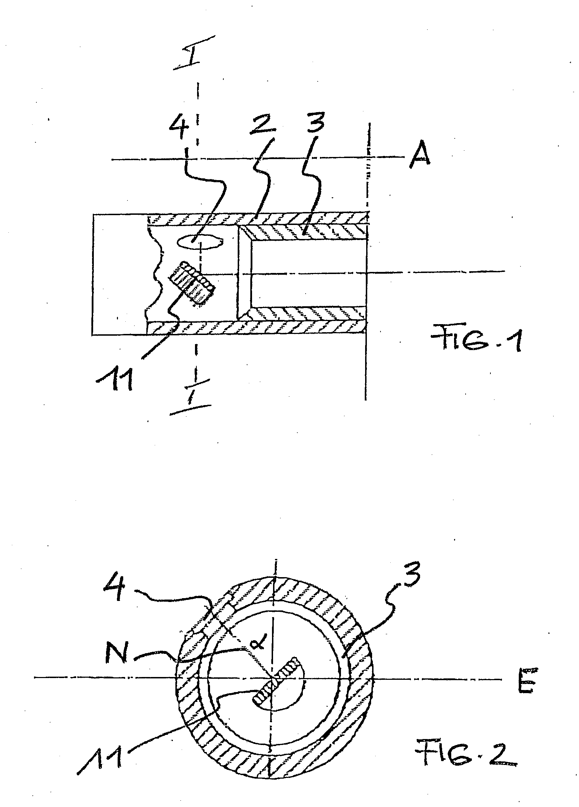

Fig. 1 zeigt eine stark vereinfachte, schematisierte Schnittdarstellung eines Teils einer ersten Ausgestaltung eines Fluidzählers 1. Der Fluidzähler umfasst ein Messrohrgehäuse 2, in dem zur Gewährleistung einer Messstrecke ein langgestrecktes Messrohr 3 positioniert ist. Innerhalb des Messrohrs befindet sich eine Umlenkeinrichtung 11, z.B. in Form eines Spiegels, mit dem ein von einem Ultraschallwandler 4 ausgesendetes Ultraschallsignal in Längsrichtung zum Messrohr 3 reflektiert wird und umgekehrt.

Auf dem Messrohrgehäuse 2 sitzt ein in Fig. 1 der Übersichtlichkeit halber nicht dargestelltes, weiteres Gehäuse, welches Elektronikelemente, wie z.B. ein Anzeigeelement, beispielsweise eine LCD-Anzeige oder dergleichen, beherbergt. Die Ebene des Anzeigeelements ist mit A gekennzeichnet.

Die Lage der Einbauebene ist in Fig. 2 mit E gekennzeichnet. Wie sich aus Fig. 2 ergibt, ist gemäß der Erfindung der jeweilige Ultraschallwandler 4 nicht an der obersten Stelle im Inneren des Messrohrgehäuses 2 angeordnet, sondern befindet sich demgegenüber an einer Position, die zur obersten Stelle in einen Winkel α schräg zur Senkrechten Einbauebene E versetzt liegt. Die Neigung der Flächennormalen N des Ultraschallwandlers 4 zur Senkrechten der Ebene E wird mit dem Winkel α gekennzeichnet. Gasbläschen im Fluid lagern sich üblicherweise an der obersten Stelle im Inneren des Messrohrgehäuses ab und beeinträchtigen daher die Ultraschallausbreitung nicht.

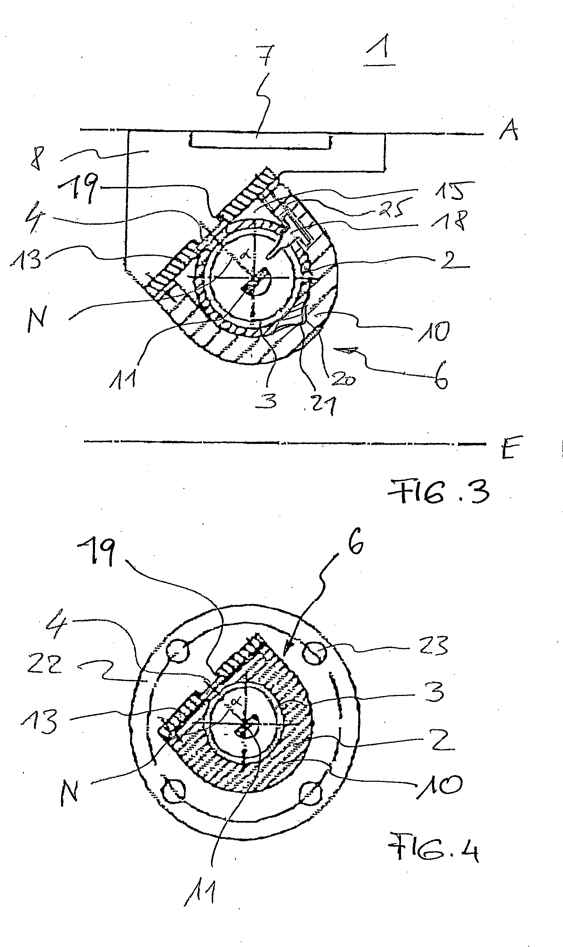

In Fig. 3 ist das Messrohrgehäuse 2 zusammen mit einer Halteeinrichtung 6 sowie dem Gehäuse 8 zur Aufnahme der Elektronikbauteile dargestellt. An der Oberseite des Gehäuses 8 befindet sich ein mit der Bezugsziffer 7 angedeutetes Anzeigeelement, beispielsweise in Form einer LCD-Anzeige. Das Anzeigeelement 7 liegt in der Ebene A (Anzeigeebene).

Das Messrohrgehäuse 2 ist über die Halteeinrichtung 6 an dem Gehäuse 8 fixiert. Die Halteeinrichtung 6 umfasst ein eine Ausnehmung 15 bildendes erstes Halteteil 10, welches das Messrohrgehäuse 2 umschließt. Ferner ist ein zweites Halteteil 13, welches in der Ausgestaltung nach Fig. 3 eine plattenartige Form besitzt, vorgesehen. Das Messrohrgehäuse 2 wird zwischen dem ersten Halteteil 10 und dem zweiten Halteteil 13 eingespannt, beispielsweise, in dem die beiden Halteteile 10, 13 über (nicht dargestellte Schrauben) verschraubt also miteinander verspannt werden.

Alternativ kann das Verbinden des ersten und zweiten Halteteils 10, 13 auch über ein einseitiges Einhängen mittels einer aufeinander abgestimmten, einseitig angebrachten Einhakgeometrie von erstem und zweitem Halteteil 10, 13 und gegenüberliegendem Verschrauben erfolgen.

Der Ultraschallwandler 4 befindet sich hierbei beispielsweise in einer Aussparung 19 am zweiten Halteteil 13, die mit einer Bohrung im Messrohrgehäuse 2 fluchtet. Im eingespannten Zustand wird der Ultraschallwandler 4 konstruktionsbedingt innerhalb der Aussparung gehalten. Mechanische Beeinträchtigungen werden vom zweiten Halteteil 13 vorteilhaft aufgenommen.

Des Weiteren sitzt in einer Tasche 25 am ersten Halteteil 10 ein Temperaturfühler 18. Auch dieser Temperaturfühler 18 wird konstruktionsbedingt in der Tasche 25 gehalten. Um ein Aufschieben des ersten Halteteils 10 bei vormontiertem Temperaturfühler 18 zu ermöglichen, verläuft die Tasche 25 parallel zur Zeichnungsebene bis zum offenen Ende des ersten Halteteils. Die Tasche 25 ist der Größe des in den ersten Halteteil eintauchenden Temperaturfühlers 18 angepasst ist. Der verbleibende (in Fig. 3 nicht dargestellte Hohlraum) wird durch ein (in Fig. 3 ebenfalls nicht dargestelltes) Füllstück z. B. aus Kunststoff oder Gummi nachträglich wieder verschlossen.

In das Messrohrgehäuse 2 ist z.B. an der dem Ultraschallwandler 4 gegenüber liegenden Seite ein Vorsprung 21 eingeformt, der in eine entsprechende Ausnehmung 20 am ersten Halteteil 10 eingreift. Hierdurch wird eine Verdrehsicherung z. B. beim Verschrauben des Fluidzählers mit dem Netzanschluss gewährleistet.

Der zweite Halteteil 13 ist als eigenständiges Teil mit dem Gehäuse 8 beispielsweise über eine Schnappverbindung, Klemmverbindung oder dergleichen verbunden.

Die Ebene E in Fig. 3 kennzeichnet die Ausrichtung der Ebene in der Einbaulage des Fluidzählers 1, die mit der Anzeigeebene A parallel ist.

In Fig. 4 ist eine zweite Ausgestaltung des erfindungsgemäßen Fluidzählers unter Weglassung des Elektronikgehäuses 8 für die Elektronikbauteile dargestellt. Das Messrohrgehäuse 2 besitzt hierbei einen Flansch 22 mit einzelnen Flanschbohrungen 23 zur lagevorbestimmten Montage an das Leitungsnetz. Der Flansch 22 ist in der Regel an beiden Enden des Messrohrgehäuses 2 vorgesehen.

Die Ausgestaltung nach Fig. 4 besitzt ebenfalls ein Elektronikgehäuse 8 für die Elektronikbauteile, welches jedoch in Fig. 4 der Übersichtlichkeit halber nicht dargestellt ist. Im Gegensatz zur Ausgestaltung nach Fig. 3 ist das erste Halteteil 10 der Halteeinrichtung 6 integraler Bestandteil des Messrohrgehäuses 2. Das Messrohrgehäuse kann z. B. aus Kunststoff in einem Produktionsschritt hergestellt werden.

Die in Fig. 3 dargestellte Ausnehmung 20 sowie der darin eingreifende Vorsprung 21 sind bei der Ausgestaltung nach Fig. 4 nicht unbedingt notwendig.

### BEZUGSZEICHENLISTE

- 1: Fluidzähler
- 2: Messrohrgehäuse
- 3: Messrohr
- 4: Ultraschallwandler
- 6: Halteeinrichtung
- 7: Anzeigeelement
- 8: Elektronikgehäuse
- 10: erstes Halteteil
- 11: Umlenkeinrichtung
- 13: zweites Halteteil
- 15: Ausnehmung
- 18: Temperaturfühler
- 19: Aussparung
- 20: Ausnehmung
- 21: Vorsprung
- 22: Flansch
- 23: Flanschbohrungen
- 25: Tasche

## Patentansprüche

1. Fluidzähler mit
einem Messrohrgehäuse (2),
einem im Messrohrgehäuse (2) angeordneten Messrohr (3),
einer im Messrohr (3) befindlichen Messstrecke,
einer Ultraschallwandleranordnung aus mindestens einem Ultraschallwandler (4) zum Erzeugen eines Ultraschallsignals und/oder zur Umwandlung eines die Messstrecke durchlaufenden Ultraschallsignals in ein elektrisches Signal und eine Umlenkeinrichtung zur Umlenkung des Ultraschallsignals in Längsrichtung des Messrohrs (3), wobei
ein Elektronikgehäuse (8) für die Aufnahme von Elektronikteilen vorgesehen ist, **dadurch gekennzeichnet, dass**
das Elektronikgehäuse (8) als eigenständiges Gehäuse ausgebildet ist,
das Messrohrgehäuse (2) in einer Halteeinrichtung (6) untergebracht ist,
die Halteeinrichtung (6) an das Elektronikgehäuse (8) montierbar ist,
die Halteeinrichtung (6) ein erstes Halteteil (10) sowie ein zweites Halteteil (13) aufweist, die eine Ausnehmung (15) zur Aufnahme des Messrohrgehäuses (2) bilden und das Messrohrgehäuse (2) nach Art einer Schelle umgreifen,
der Ultraschallwandler (4) sich in einer Aussparung (19) am zweiten Halteteil (13) befindet, die mit einer Bohrung im Messrohrgehäuse (2) fluchtet, und
das zweite Halteteil (13) als eigenständiges Teil mit dem Elektronikgehäuse (8) verbunden ist.

2. Fluidzähler nach Anspruch 1,
**dadurch gekennzeichnet, dass**
das Messrohrgehäuse (2) in der Halteeinrichtung (6) festklemmbar ist.

3. Fluidzähler nach Anspruch 1,
**dadurch gekennzeichnet, dass**
mindestens ein Funktionsteil, insbesondere ein Wandler (4) und/oder einen Temperaturfühler (18), durch die Halteeinrichtung (6) in Position gehalten wird.

4. Fluidzähler nach mindestens einem der Ansprüche 1 - 3,
**dadurch gekennzeichnet, dass**
eine Verdrehsicherung zwischen Messrohrgehäuse (2) und Halteeinrichtung (6) vorgesehen ist.

5. Fluidzähler nach mindestens einem der Ansprüche 1 - 4,
**dadurch gekennzeichnet, dass**
das erste Halteteil (10) in das Messrohrgehäuse (2) integriert ist.

6. Fluidzähler nach mindestens einem der Ansprüche 1 - 5,
**dadurch gekennzeichnet, dass**
das zweite Halteteil (13) als einheitliches Teil zur Aufnahme von ersten Halteteilen (10) mit verschiedenen Durchflussnennquerschnitten vorgesehen ist.

7. Fluidzähler nach Anspruch 6,
**dadurch gekennzeichnet, dass**
am zweiten Halteteil (13) mehrere wählbare Montagepositionen zur Befestigung des ersten Halteteils (10) vorgesehen sind.

8. Fluidzähler nach mindestens einem der Ansprüche 1 - 7,
**dadurch gekennzeichnet, dass**
das zweite Halteteil (13) mit dem Elektronikgehäuse (8), vorzugsweise über eine Schnappverbindung oder Klemmverbindung, lösbar verbunden ist.

9. Fluidzähler nach einem der Ansprüche 7 oder 8,
**dadurch gekennzeichnet, dass**
die Montageposition an einem Vorsprung des zweiten Halteteils (13) vorliegt, der das Elektronikgehäuse (8) seitlich überragt.

10. Fluidzähler nach mindestens einem der Ansprüche 1 - 9,
**dadurch gekennzeichnet, dass**
im Elektronikgehäuse (8) mindestens ein Führungskanal für Kabelverbindungen vorgesehen ist.

11. Fluidzähler nach mindestens einem der vorhergehenden Ansprüche 1 - 10,
**dadurch gekennzeichnet, dass**
das erste Halteteil (10) als Schale ausgebildet ist.

## Claims

1. Fluid meter having
a measuring tube housing (2),
a measuring tube (3) arranged in the measuring tube housing (2),
a measurement distance which is located in the measuring tube (3),
an ultrasonic transducer arrangement composed of at least one ultrasonic transducer (4) for generating an ultrasonic signal and/or for converting an ultrasonic signal which passes through the measurement distance into an electrical signal, and a deflector device for deflecting the ultrasonic signal in the longitudinal direction of the measuring tube (3), wherein
an electronics housing (8) is provided for accommodating electronic parts, **characterized in that**
the electronics housing (8) is embodied as a standalone housing,
the measuring tube housing (2) is accommodated in a securing device (6),
the securing device (6) can be mounted onto the electronics housing (8),
the securing device (6) has a first securing part (10) and a second securing part (13) which form a recess (15) for accommodating the measuring tube housing (2) and which engage around the measuring tube housing (2) in the manner of a clip,
the ultrasonic transducer (4) is located in a cutout (19) on the second securing part (13) which is aligned with a drilled hole in the measuring tube housing (2), and
the second securing part (13) is connected as a standalone part to the electronics housing (8).

2. Fluid meter according to Claim 1, **characterized in that** the measuring tube housing (2) can be clamped tight in the securing device (6).

3. Fluid meter according to Claim 1, **characterized in that** at least one functional part, in particular a transducer (4) and/or a temperature sensor (18) are/is held in position by the securing device (6).

4. Fluid meter according to at least one of Claims 1-3, **characterized in that** an anti-rotation device is provided between the measuring tube housing (2) and the securing device (6).

5. Fluid meter according to at least one of Claims 1-4, **characterized in that** the first securing part (10) is integrated into the measuring tube housing (2).

6. Fluid meter according to at least one of Claims 1-5, **characterized in that** the second securing part (13) is provided as a uniform part for accommodating the first securing parts (10) with various rated flow cross-sections.

7. Fluid meter according to Claim 6, **characterized in that** a plurality of selectable mounting positions for attaching the first securing part (10) are provided on the second securing part (13).

8. Fluid meter according to at least one of Claims 1-7, **characterized in that** the second securing part (13) is detachably connected to electronics housing (8), preferably via a snap lock connection or clamping connection.

9. Fluid meter according to one of Claims 7 or 8, **characterized in that** the mounting position is present on a projection of the second securing part (13), which projection protrudes laterally from the electronics housing (8).

10. Fluid meter according to at least one of Claims 1-9, **characterized in that** at least one guide duct for cable connections is provided in the electronics housing (8) .

11. Fluid meter according to at least one of the preceding Claims 1-10, **characterized in that** the first securing part (10) is embodied as a shell.

## Revendications

1. Compteur de fluide, comprenant
un boîtier de tube de mesure (2),
un tube de mesure (3) disposé dans le boîtier de tube de mesure (2),
un parcours de mesure situé dans le tube de mesure (3),
un ensemble convertisseur d'ultrasons composé d'au moins un convertisseur d'ultrasons (4) pour la génération d'un signal ultrasonore et/ou pour la conversion d'un signal ultrasonore traversant le parcours de mesure en un signal électrique, et un dispositif de déviation pour la déviation du signal ultrasonore dans la direction longitudinale du tube de mesure (3),
un boîtier électronique (8) étant prévu pour recevoir des composants électroniques,
**caractérisé en ce que**
le boîtier électronique (8) est réalisé sous la forme d'un boîtier autonome,
le boîtier de tube de mesure (2) est logé dans un dispositif de retenue (6),
le dispositif de retenue (6) peut être monté sur le boîtier électronique (8),
le dispositif de retenue (6) présente une première pièce de retenue (10) ainsi qu'une deuxième pièce de retenue (13) qui constituent un évidement (15) destiné à recevoir le boîtier de tube de mesure (2) et entourent le boîtier de tube de mesure (2) à la manière d'une bride,
le convertisseur d'ultrasons (4) se trouve dans un creux (19) sur la deuxième pièce de retenue (13) qui est aligné sur un perçage dans le boîtier de tube de mesure (2), et
la deuxième pièce de retenue (13) est reliée au boîtier électronique (8) sous la forme d'une pièce indépendante.

2. Compteur de fluide selon la revendication 1, **caractérisé en ce que** le boîtier de tube de mesure (2) peut être calé dans le dispositif de retenue (6).

3. Compteur de fluide selon la revendication 1, **caractérisé en ce qu'**au moins une pièce fonctionnelle, en particulier un convertisseur (4) et/ou une sonde de température (18), est retenue en position par le dispositif de retenue (6).

4. Compteur de fluide selon au moins l'une des revendications 1 à 3, **caractérisé en ce qu'**un système anti-rotation est prévu entre le boîtier de tube de mesure (2) et le dispositif de retenue (6).

5. Compteur de fluide selon au moins l'une des revendications 1 à 4, **caractérisé en ce que** la première pièce de retenue (10) est intégrée dans le boîtier de tube de mesure (2).

6. Compteur de fluide selon au moins l'une des revendications 1 à 5, **caractérisé en ce que** la deuxième pièce de retenue (13) est prévue sous la forme d'une pièce uniforme destinée à loger des premières pièces de retenue (10) dotées de différentes sections transversales nominales de débit.

7. Compteur de fluide selon la revendication 6, **caractérisé en ce que** plusieurs positions de montage sélectionnables sont prévues sur la deuxième pièce de retenue (13) pour fixer la première pièce de retenue (10) .

8. Compteur de fluide selon au moins l'une des revendications 1 à 7, **caractérisé en ce que** la deuxième pièce de retenue (13) est reliée de manière amovible au boîtier électronique (8), de préférence par un assemblage par encliquetage ou un assemblage par serrage.

9. Compteur de fluide selon l'une quelconque des revendications 7 ou 8, **caractérisé en ce que** la position de montage se trouve sur une saillie de la deuxième pièce de retenue (13) qui dépasse latéralement du boîtier électronique (8).

10. Compteur de fluide selon au moins l'une des revendications 1 à 9, **caractérisé en ce qu'**au moins un canal de guidage pour des liaisons câblées est prévu dans le boîtier électronique (8).

11. Compteur de fluide selon au moins l'une des revendications précédentes 1 à 10, **caractérisé en ce que** la première pièce de retenue (10) est réalisée sous la forme d'une coque.
